# EUROPEAN PATENT APPLICATION

(11) **EP 3 546 545 A1**
(43) Date of publication of application: **02.10.2019**
(21) Application number: 18382213.9
(22) Date of filing: 27.03.2018
(51) Int. Cl.: C09K 11/88, C09K 11/56, H05B 33/14, H05B 33/10

(54) **PROCESS FOR OBTAINING QUANTUM RODS IN WATER WITH ENHANCED FLUORESCENCE INTENSITY**

(71) Applicant: Consejo Superior De Investigaciones Científicas (CSIC), 28006 Madrid (ES)
(72) Inventor: SAHA, Arpita, 08193 Cerdanyola del Vallès (Barcelona) (ES); SAINI, Abhishek, 08193 Cerdanyola del Vallès (Barcelona) (ES); TEIXIDOR BOMBARDÓ, Francesc, 08193 Cerdanyola del Vallès (Barcelona) (ES); VIÑAS TEIXIDOR, Clara, 08193 Cerdanyola del Vallès (Barcelona) (ES)
(74) Representative: Pons Ariño, Angel

(57) **Abstract**

The invention relates to a process for obtaining Quantum Rods in water under hydrothermal conditions by using a high pressure device. Moreover, the present invention is related to the Quantum Rods obtainable by said process and the use of said Quantum Rods in optoelectonics and for biotechnological and biomedical imaging applications. Therefore, the present invention could be included in the field of the preparation of nanotechnological materials (nanomaterials) with interest in optoelectronics and in biotechnology.

## Description

The invention relates to a process for obtaining Quantum Rods in water under hydrothermal conditions by using a high pressure device. Moreover, the present invention is related to the Quantum Rods obtainable by said process and the use of said Quantum Rods in optoelectonics and for biotechnological and biomedical imaging applications.

Therefore, the present invention could be included in the field of the preparation of nanotechnological materials (nanomaterials) with interest in optoelectronics and in biotechnology.

### STATE OF ART

It has been recently demonstrated that the shape of CdSe nanocrystals can be manipulated by controlling the growth kinetics. The resulting particles have from a nearly spherical morphology to rod-like one. The aspect ratio describes the proportional relationship between its width and its height. For instance, rods up to 200 nm long with an aspect ratio of up to 50 have been grown in the organic medium by hot injection method.

Studies of rod- and wire-like structures can provide a testing ground for the shape-dependent electronic and optical properties of nanocrystals and the quantum confinement effects in one-dimensional (1d) and quasi-1d regime, and in comparison with much characterized zero-dimensional (0d) structures. (Band gap variation of size- and shape-controlled colloidal CdSe Quantum Rods by Liang-shi Li, Jiangtao Hu, Weidong Yang and A. Paul Alivisatos, Nano Letters, 1, 349-351, 2001)

In "Semiconductor Nanocrystals: Shape Matters" (Nature Materials, 2, 138-139, 2003), William E. Buhro and Vicki L. Colvin, suggest that electronic structures and optical properties of band edge have strong dependence not only on the size but also on the shape of nanocrystals. For example, the measurements on CdSe ensemble Quantum Rods have shown that Stokes shift is noticeably larger than that of the corresponding Quantum Dots, and being even larger with the increase of Quantum Rod lengths. Also the polarization of the emission of CdSe Quantum Rods exhibits significant difference in comparison with the CdSe Quantum Dots.

Quantum Rods, due to their rod morphology may be used as polarized emitters for light-emitting diodes in the field of optoelectronics or as biological labeling reagents with interest in the field of biotechnology. As an example for the mentioned biotechnology interest it is to mention that Quantum Rods can be used to track single molecules. The ability to track single molecules is a powerful method to study the dynamic and kinetic behavior of biomolecules inside living cells. Although Quantum Dots were shown to be able to image single molecules in living cells, the enhanced fluorescent signal from Quantum Rods make them ideal probes for single molecule tracking. Compared to Quantum Rods, Quantum Dots are not so bright so they are not statistically distinct from the noise and thus not quite as accurate a measurable quantity as the rods when tested in analytical softwares. Thus, Quantum Rods are much more intense fluorescent probes than Quantum Dots, it would be easier to use Quantum Rods for such biological labels.

Quantum Dots in water are mostly synthesized by being capped with varied thiols or protein groups. The precursors used for Cadmium and Selenium generally are CdCl₂.2.5H₂O and NaHSe. The advantage of synthesis of Quantum Dots in water is mainly because it involves easy processing, high reproducibility, low cost approach and environment friendly synthesis procedure without use of extreme high temperature. Quantum Dots are excellent materials for fluorescent cellular probes and as biological tags and they can be used extensively for this purpose. So, in order to be used in biomedical applications Quantum Dots need to be synthesized in water environment as all biological environments are water based. Water soluble Quantum Dots can be used directly as labeling and imaging for biological applications. But till date there has been no synthesis which states of the fact that the Quantum Rods can be directly synthesized in water. So far in order to use Quantum Rods for biological applications Quantum Rods have always been synthesized by the hot injection method necessarily in high boiling organic and then silanized to be used in the biological media. The hot injection method is not only done at a very high temperature and in organic medium, it also poses the problem of isolating the Quantum Rods from the solution. The hot injection method produces Quantum Rods in organic solvent from which the Quantum Rods are difficult to isolate and therefore the ligand exchange process is done by adding silanes to make them soluble in water.

For the reasons stated above, it is needed to develop efficient and simple processes for obtaining Quantum Rods in water with enhanced fluorescence intensity.

### DESCRIPTION OF THE INVENTION

The present invention relates to a direct synthesis of Quantum Rods in water having a composition selected from ZnSe, ZnS, CdS or CdSe. It refers to a colloidal hydrothermal process for obtaining Quantum Rods with enhanced fluorescence intensity purely in water without surface silanization. The reaction that produces the Quantum Rods is performed inside a high pressure device and, by evaporating a percent of water during a short period of time. Said Quantum Rods may be used in optoelectronics or biotechnological and biomedical imaging applications.

The biggest advantage of the Quantum Rods synthesis in water is that the synthetic procedure is easy and highly reproducible with less cumbersome manipulations of the temperature and reaction conditions. It is a low-cost approach with environmental friendly conditions. The synthesis in water is also beneficial as it is easy to separate the particles after formation and it requires no post synthesis treatment in high temperatures to obtain the particles in solid state and remove excess solvent.

The main advantage of this method is the fact that it is synthesized in water which makes these rods extremely good products for their utilization in biological media. Quantum Rods have major advantages over Quantum Dots: Quantum Rods have larger absorption cross section, faster radiative decay rate, bigger Stokes shift, and can be functionalized with multiple binding moieties. Furthermore, a single quantum rod exhibits linearly polarized emission unlike the plane-polarized light from a single quantum dot. And the emission of single Quantum Rods can be reversibly switched on-off by external electric fields. These unique properties make Quantum Rods highly desirable for certain biological applications and bring new possibilities for biological labeling. The Quantum Rods are also much more resistant to degradation than other optical imaging probes such as organic dyes and even Quantum Dots, allowing them to track cell processes for longer periods of time.

The term "Quantum Rods" refers herein to a long thin bar structure in which the diameter or width of the rod exhibits quantum effects, that is, the wavelength of light emitted is a function of the diameter or width. The rod has a length that is greater than that which contributes to the quantum effect, i.e., where the length has no effect on the wavelength of light emitted. Quantum Rods emit much brighter light than individual quantum dots formed of the same material. In the present invention, the length of the rod is between 100 nm and 300 nm and the diameter or width of between 20 nm and 30 nm.

The term "High pressure device" refers herein to High pressure tubes, autoclaves or high pressure stainless vessels. A preferred device is a high pressure tube which has enough pressure resistance to use it as container of the reaction for producing Quantum Rods. It is a heavy tube containing reagents and hermetically closed so that interaction of the contents can be brought about at a much higher pressure than would be possible in an open tube.

A first aspect of the present invention relates to a process for obtaining Quantum Rods in aqueous media (herein "the process of the invention") having a composition selected from ZnSe, ZnS, CdS or CdSe characterized in that it comprises the following steps:
a) sequential adding an aqueous solution comprising Cd⁺² or Zn⁺² ions, a surfactant agent and a reducing agent into high pressure device;
b) adjusting the pH of the solution obtained in step (a) by adding a base to reach a pH range of between 9.5 and 12.5;
c) heating the high pressure device to raise its temperature to a temperature range of between 75 ºC and 100 ºC;
d) adding an aqueous solution of SeO₂ or an aqueous solution comprising S²⁻into the high pressure device, to the heated solution obtained in step (c);
e) heating the high pressure device to raise its temperature to a temperature value of between 140 ºC and 190 ºC;
f) reducing the pressure inside the high pressure device by 20 % to 30 % to evaporate between 40 % to 100 % of the water contained in the solution obtained in step (e);
g) maintaining the temperature of the partially opened high pressure device between 140 º C and 190 ºC for a time period of between 50 min and 70 min;
h) quenching the precipitate obtained in step (g) to room temperature; and
i) extracting the quenched precipitate obtained in step (h).

Step (a) relates to the sequential addition of an aqueous solution comprising Cd⁺² or Zn⁺² ions, a surfactant agent and a reducing agent into a high pressure device.

For the obtainment of Quantum Rods of ZnSe or ZnS, an aqueous solution comprising Zn⁺² ions is used.

For the obtainment of Quantum Rods of CdSe or CdS, an aqueous solution comprising Cd⁺² ions is used.

Preferably, an aqueous solution of CdCl₂ is used as aqueous solution comprising Cd⁺² ions and an aqueous solution of zinc nitrate is used as an aqueous solution comprising Zn⁺² ions.

In a preferred embodiment of the process of the invention, the aqueous solution comprising Cd⁺² or Zn⁺² ions of step (a) has a concentration of between 0.35 M and 0.45 M.

In another preferred embodiment of the process of the invention, the surfactant agent and the reducing agent of step (a) are the same as or different from each other.

Preferably, the surfactant agent and the reducing agent of step (a) are the same.

In a preferred embodiment of the process of the invention, the surfactant agent and the reducing agent of step (a) are a mercaptan acid. Examples of a mercaptan acid are mercaptoacetic acid, mecaptopropionic acid and mercaptosuccinic acid.

Preferably, the concentration of the surfactant agent and the reducing agent of step (a) is between 0.2 M and 0.3 M.

Step (b) of the process of the invention refers the adjustment of the pH of the solution obtained in step (a) by adding a base to reach a pH range of between 9.5 and 12.5.

In a preferred embodiment of the process of the invention the base of step (b) is selected from the list consisting of amines, NaOH and KOH.

Step (c) of the process of the invention relates to the heating of the high pressure device to raise its temperature to a temperature range of between 75 ºC and 100 ºC. The temperature plays an important role since a deviation of 15 ºC prevents the formation of the Quantum Rods. Preferably, this step (c) is performed by introducing the high pressure device into a sand bath.

Step (d) of the process of the invention relates to the addition of an aqueous solution of SeO₂ or an aqueous solution comprising S²⁻ ions, into the high pressure device, to the heated solution obtained in step (c).

For the obtainment of Quantum Rods of ZnSe or CdSe, an aqueous solution of SeO₂ is used.

For the obtainment of Quantum Rods of ZnS or CdS, an aqueous solution comprising S²⁻ ions such as (Na₂S.9H₂O) is used.

Step (f) of the process of the invention refers to the reduction of the pressure inside the high pressure device by 20 % to 30 % to evaporate between 40 % to 100 % of the water contained in the solution obtained in step (e). For instance, the pressure tube can be partially opened by turning the screw cap (1 turn, out of 7 turns) so that the pressure releases slowly and the water evaporates. It is important that the evaporation of the water contained in the solution releases slowly in order to obtain stable Quantum Rods.

Step (g) of the process of the invention refers to the maintenance of the temperature of the partially opened high pressure device between 140 º C and 190 ºC for a time period of between 50 min and 70 min. This step helps to evaporate the water and cause the precipitate to stick to the walls which contain the Quantum Rods.

When 100 % of the water is evaporated, precipitate left stuck on the walls of the high pressure device, is kept to cool down and then dried.

Step (h) of the process of the invention relates to the quenching of the precipitate obtained in step (g) to room temperature and step (i) refers to the extraction of the quenched precipitate obtained in step (h).

In a preferred embodiment of the process of the invention, the quenching of step (g) is performed in air.

In a preferred embodiment of the process of the invention, the composition of the Quantum Rods is CdSe and the process is characterized by the following steps:
a) sequential adding an aqueous solution of CdCl₂, a surfactant agent and a reducing agent into high pressure device; preferably the aqueous solution of CdCl₂ of step (a) has a concentration of between 0.35 M and 0.45 M;
b) adjusting the pH of the solution obtained in step (a) by adding a base to reach a pH range of between 10.5 and 11.5;
c) heating the high pressure device to raise its temperature to a temperature range of between 85 ºC and 95 ºC;
d) adding an aqueous solution of SeO₂ into the high pressure device, to the heated solution obtained in step (c);
e) heating the high pressure device to raise its temperature to a temperature value of between 150 ºC and 170 ºC;
f) reducing the pressure inside the high pressure device by 20 % to 30 % to evaporate between 40 % to 100 % of the water contained in the solution obtained in step (e);
g) maintaining the temperature of the partially opened high pressure device between 150 º C and 170 ºC for a time period of between 50 min and 70 min;
h) quenching the precipitate obtained in step (g) to room temperature; and
i) extracting the quenched precipitate obtained in step (h).

In a more preferred embodiment of the process of the invention, the ratio of Cd:Se after step (d) is between 6:1 to 3:1, the most preferred ratio is 4:1 that produces the highest yield of Quantum Rods. It is to mention that this ratio is a critical parameter in the procedure of the invention; for instance when the ratio of 2:1 is used then even using this method only Quantum Dots and not Quantum Rods are produced.

A second aspect of the present invention relates to the Quantum Rods obtainable by the process described above (herein "the Quantum Rods of the invention"), characterized in that
- they have a composition selected from ZnSe, ZnS, CdS or CdSe
- their length is between 100 nm and 300 nm and their diameter is between 20 nm and 30 nm.
The next aspect of the present invention refers to a polymeric film selected from a Poly(vinyl alcohol), Polyvinyl Butyral, Polyvinyl Formal and Polydimethyl siloxane (PDMS) (herein "the polymeric film of the invention"), characterized in that
- it comprises the Quantum Rods of the invention,
- wherein the Quantum Rods are homogeneously distributed in the polymeric film,
- and wherein the proportion of the Quantum Rods in the polymeric film is between 60 % and 85 % with respect of the final polymeric film; depending on the thickness of the films.

If the film is 10 slices thick with each slice being 10 micro meters then it has a probable proportion of 60 % while if there are 25 slices then it has a higher distribution of around 80 % to 85 %.

The process for obtaining the polymeric film of the invention is any conventional process for obtaining polymeric films known by the skilled in the art, wherein the starting compounds or precursor materials are the Quantum Rods of the invention and a solution of a suitable polymer such as a Polyvinyl alcohol, Polyvinyl Butyral, Polyvinyl Formal and Polydimethyl siloxane (PDMS) in an appropriate solvent.

Another aspect of the present invention refers to the use of the Quantum Rods and the polymeric film of the invention as part of a device useful in optoelectronics such as a polarized emitter. The Quantum Rods and the polymeric film of the invention can be used for polarized emission because of their aspect ratio. Theory predicts a level crossing as a function of aspect ratio in colloidal Quantum Rods due to their elongated length should produce linearly polarized emission.

Another aspect of the invention refers to the use of the Quantum Rods of the invention in biotechnological applications such as biological label reagent.

A further aspect of the present invention refers to the Quantum Rods and the polymeric film of the invention as part of a device useful for biomedical imaging applications.

Another aspect of the present invention refers to the use of the Quantum Rods and the polymeric film of the invention as part of a Quantum light-emitting diode LED.

The term "Quantum light-emitting diode LED" refers herein to a semiconductor device that emits visible light when an electric current passes through it. The light is monochromatic, occurring at a single wavelength.

Nanocrystal displays would render as much as a 30 % increase in the visible spectrum, while using 30 % to 50 % less power than LEDs, in large part because nanocrystal displays wouldn't need backlighting. Q LEDs are 50-100 times brighter than cathode-ray tube (CRT) and liquid-crystal display (LCD), emitting 40000 cd/m².

Rather than requiring a separate LED backlight for illumination and TFT LCD to control the brightness of color primaries, these QLED displays natively control the light emitted by individual color subpixels, greatly reducing pixel response times by eliminating the liquid crystal layer.

Other advantages include better saturated green colours, manufacturability on polymers, thinner display and the use of the same material to generate different colours.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

FIG. 1 TEM images of the CdSe Quantum Rods (a-f)
FIG. 2. Size distribution of the CdSe Quantum Rods
FIG. 3 EDX Analysis of the CdSe Quantum Rods shows the presence of Cadmium, Selenium and Sulphur.
FIG. 4 shows the Fluorescence Intensity of the obtained CdSe Quantum Rods.
FIG. 5 shows the Confocal Microscopy spectrum of a Polymeric film embedding Quantum Rods (Sample containing 3 ml of PVA solution).
FIG. 6 shows the Confocal Microscopy spectrum of a Polymeric film embedding Quantum Rods (Sample containing 4 ml of PVA solution).
FIG. 7 shows the 3D snapshot by Confocal Microscopy of a Polymeric film embedding Quantum Rods.
FIG. 8 shows the HRSEM image of the Quantum Rods embedded in the polymeric films and their distribution pattern. The back scattering image shows the distribution of the Quantum Rods throughout the film.
FIG. 9 shows the HRSEM of the film with the quantum rods. There are two images. The one on the left shows the backscattering image in which we can see only the embedded Quantum Rods and not the film. On the other hand, in the right image we can see the secondary lens image, in which we can see both the film and the Quantum Rods.
FIG. 10 shows the HRSEM of the Quantum Rods dispersed in the polymeric film at a higher magnification. It shows the back scattered image from deeper levels of the film and the distribution of the quantum rods at deeper regions inside the film. It only shows the Quantum Rods embedded inside the film.
FIG. 11 shows the HRSEM of the Quantum Rods dispersed in the polymeric film at a higher magnification. It shows the secondary image from deeper levels of the film and the distribution of the Quantum Rods at deeper regions inside the film. It shows both the film and the Quantum Rods embedded inside it.

### EXAMPLES

### Example 1: Synthesis of CdSe Quantum Rods

456 mg of CdCl₂.2.5H₂O (Cadmium precursor) was dissolved in 5 ml of distilled water; 56 mg of SeO₂ (Selenium precursor) was dissolved in 5 ml of distilled water. The two solutions were prepared separately and stirred for 10 minutes till them both formed clear solutions. Everything in this procedure is done in normal conditions and not under N₂ atmosphere.

The Cadmium solution was then transferred to a Sigma Aldrich Ace pressure tube. The tube was inserted in a sand bath well insulated with cork. The sand bath had been covered with a cork sheet on the outer walls and the top of the bath had been covered with a cork sheet with holes to insert the tubes in them. Then when the tube with the Cadmium solution was started to being heated, 0.2 ml of Mercaptopropionic acid was added to the Cadmium solution followed by the addition of Ammonium Hydroxide to maintain the pH around 11.

Afterwards, when the temperature had reached 90 ºC, after 20 minutes of heating, the Selenium solution was added into the tube. Then, the tube was closed and heated up to 160 ºC. It took around 15 minutes to reach the temperature. It was maintained at 160 °C for 5 to 10 minutes till the temperature became stable. Next the pressure tubes were opened a turn of the screw cap (7 turns in 1.5 cm) to let the pressure release and the water evaporate. These opened tubes were maintained at 160 °C for 60 mins.

After that the tube was pulled out of the sand bath and left to cool to room temperature. The water had mostly evaporated and the precipitate had stuck to the walls of the tube. The obtained precipitate which was mostly orange and red in colour, was further washed with water twice and then the precipitate is left for drying in vacuum and dispersed in ethanol. This suspension showed bright orange fluorescence and had Quantum Rods in them.

A high yield of 96 % for both, solid and dispersed form of the Quantum Rods is achieved by following the mentioned process.

### Characterization of the obtained Quantum Rods

### a) Transmission Electron Microscopy (TEM) Images of Quantum rods:

Transmission electron microscopy (TEM) studies were carried out using JEOL JEM 1210 at 120 kV. TEM samples were made by dropping a drop of CdSe Quantum Rod suspension onto the carbon coated copper grids. The microscopy images showed Quantum Rods of 29.8nm mean size.

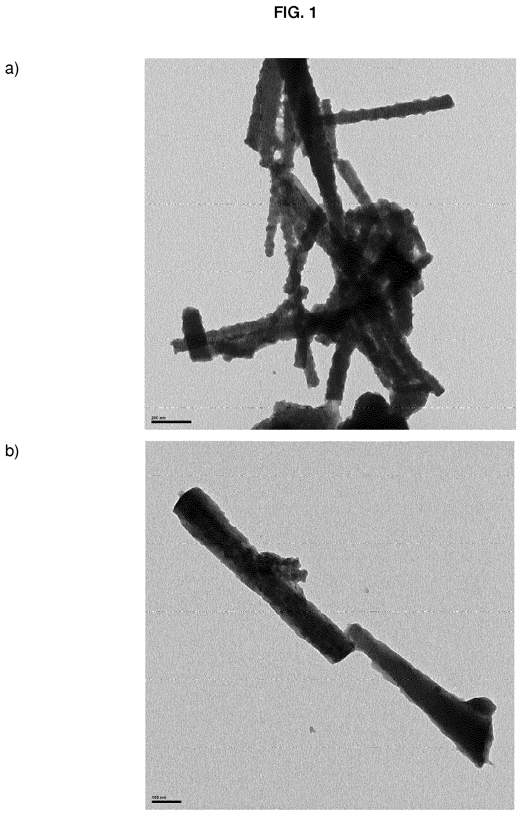

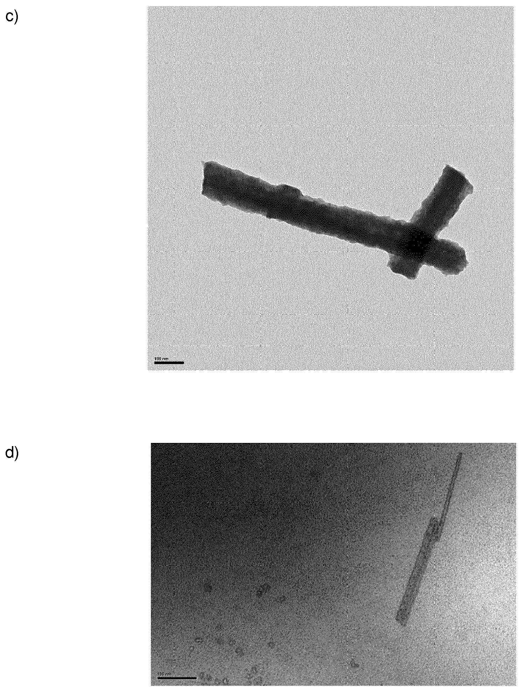

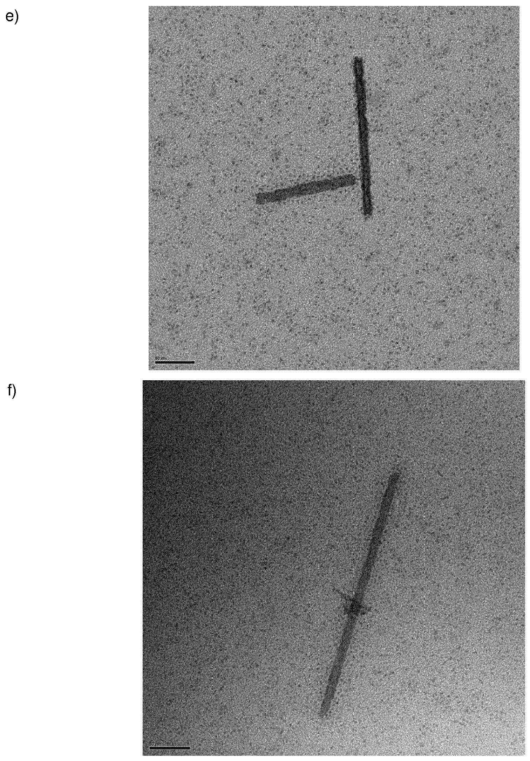

FIG. 1 (a-f) shows TEM images of the obtained Quantum Rods.

### b) Size distribution of Quantum Rods

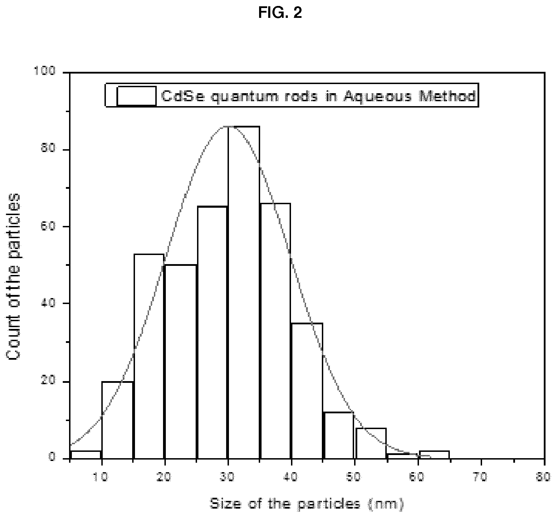

FIG. 2 shows the size distribution of the obtained Quantum Rods.

The Size distribution of the particles was done by measuring over 200 rods from the TEM images and then plotting the histogram in origin. The gaussian curve fitting was done to estimate the mean size of the rods which is around 29.8 nm in dimension.

### c) Energy Dispersive X-ray Spectroscopy (EDX) analysis of Quantum rods:

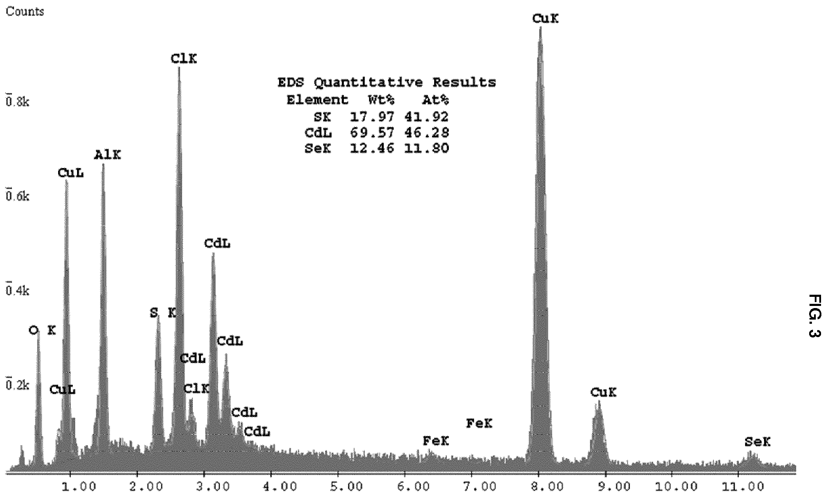

FIG. 3 shows the presence of Cadmium, Selenium and Sulphur.

The EDX analysis was done in QUANTA FEI 200 FEG-ESEM device. Powdered Quantum Rods were measured in carbon taped stubs. The EDX analysis showed the presence of Cadmium, Selenium and Sulphur. The ratio of Cd:Se is ∼4:1.

### d) Fluorescence

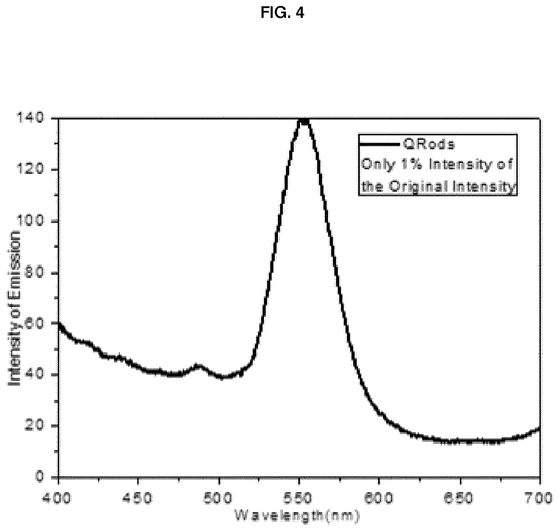

FIG. 4 shows the Fluorescence Intensity of the obtained Quantum Rods.

The fluorescence measurements were done in Perkin Elmer LS45 fluorimeter. The fluorescence intensity was measured by dispersing the powdered Quantum Rods in ethanol. The intensity shown here is only 1 % of the total intensity as filter was used to record the intensity of emission. The original intensity of the Quantum Rods synthesized is 100 times more than depicted here according to the arbitrary units of the instrument. The wavelength of emission is 550 nm.

### Example 2: Polymeric films embedding CdSe Quantum Rods

The above synthesized Quantum Rods in water were used to prepare polymeric films with Polyvinyl Alcohol (PVA). The powdered rods were dispersed in a solution of PVA and made into films. The PVA solution was made with 300 mg of PVA powder of molecular weight ∼31000 dissolved in 10 ml of water. The solution was heated at 60 °C for 6 hours to completely dissolve in water. Once the PVA solution was made it was kept to cool down for some time. After that, 15 mg of CdSe Quantum Rods were dissolved in PVA solution of 3 ml. Other solutions of 4 ml, 5 ml and 6 ml volume of PVA each containing 15 mg of CdSe Quantum Rods were made too. These solutions were stirred for 1 hour to get a smooth consistency between the polymer and the solid Quantum rods. After that, the suspension of Quantum Rods and PVA was spread across glass slides by doctor blading with scotch tapes to produce the films. These films were left to be dried for over-night and then they were peeled off from the slides and characterized using confocal microscopy to get images of their fluorescence and also the wavelength of emission. The wavelength of emission for these films embedding Quantum rods coincided with the emission wavelength of the Quantum rods in solution. Out of all the samples made, the films made with 3 ml and 4 ml of PVA solution showed brighter intensity of fluorescence than the rest of the films, and they also were much thinner than the rest, thus helping in enhancing the fluorescence intensity.

These Polymeric films embedding the above described Quantum Rods can be ideal candidates to be used instead of organic dyes for the preparation of QLEDs and show much brighter emission.

### Characterization of Quantum Rods embedded in Polymeric films

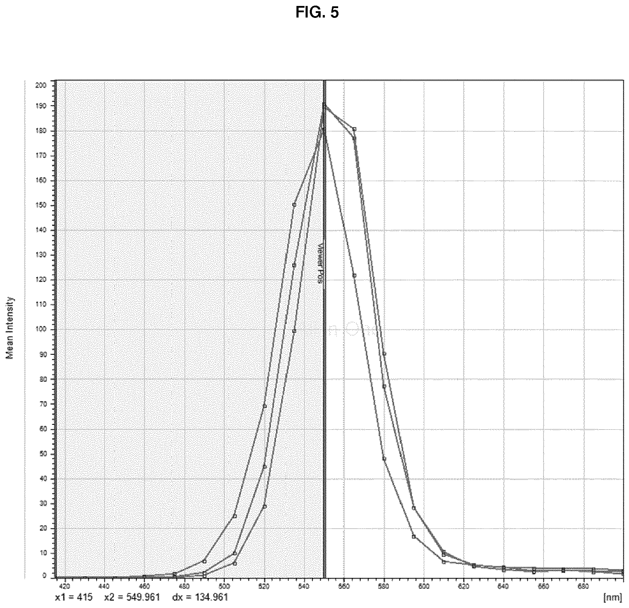

FIG. 5 shows the Confocal Microscopy spectrum of the Polymeric film embedding Quantum Rods (Sample containing 3 ml of PVA solution).

The confocal microscopy was done using Olympus Fluoview 1000. The confocal microscopy of the polymeric films were done in order to obtain the wavelength of emission of the Quantum Rods embedded in the polymeric film and to check whether they coincide with the wavelength of emission when they are dispersed in ethanol. The wavelength of emission was preserved for the Quantum Rods although they were embedded inside the polymeric film (sample containing 3 ml of PVA solution); even inside the films they showed an emission at 550 nm, which is the same wavelength of emission as seen in the fluorescence intensity of the dispersed quantum rods.

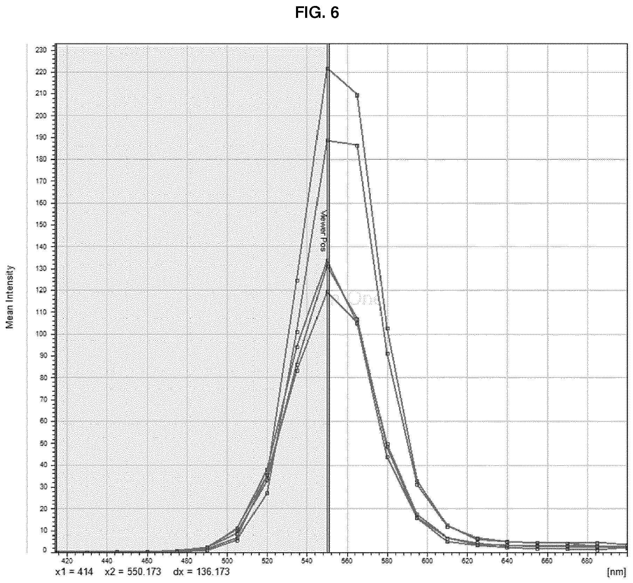

FIG. 6 shows the Confocal Microscopy spectrum of the Polymeric film embedding Quantum Rods (Sample containing 4 ml of PVA solution)

The confocal microscopy of the polymeric films were done in order to obtain the wavelength of emission of the Quantum Rods embedded in the polymeric film and to check whether they coincide with the wavelength of emission when they are dispersed in ethanol. The wavelength of emission was preserved for the Quantum Rods although they were embedded inside the polymeric film (sample containing 4 ml of PVA solution); even inside the films they showed an emission at 550 nm, which is the same wavelength of emission as seen in the fluorescence intensity of the dispersed quantum rods.

The Electron diffraction pattern of the polymeric film embedding Quantum Rods confirms the formation of CdSe in hexagonal structure.

The numbers are obtained from the reticular spacing number (d-spaces) corresponding to the hkl indices characteristic of CdSe hexagonal structure. These hkls indices confirm the formation of CdSe in its hexagonal structure.

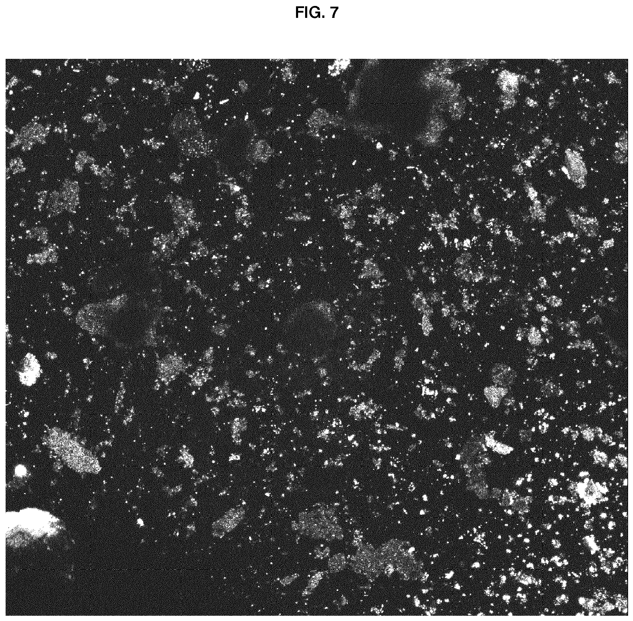

FIG. 7 shows the 3D snapshot by Confocal Microscopy of a Polymeric film embedding Quantum Rods

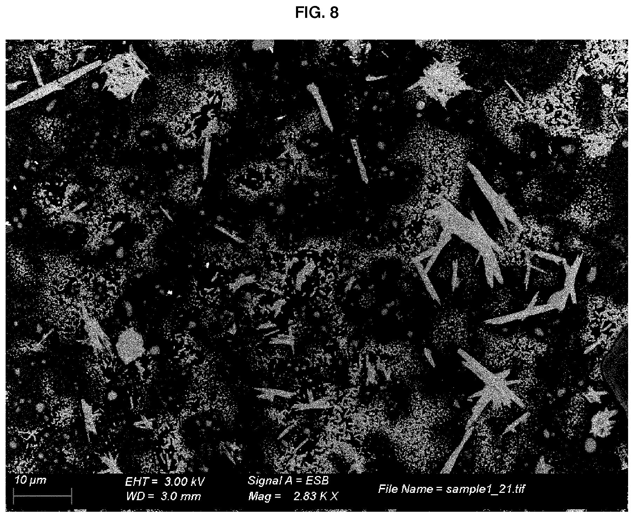

FIG. 8 shows the HRSEM image of the Quantum Rods embedded in the polymeric films and their distribution pattern. The back scattering image shows the distribution of the Quantum Rods throughout the film.

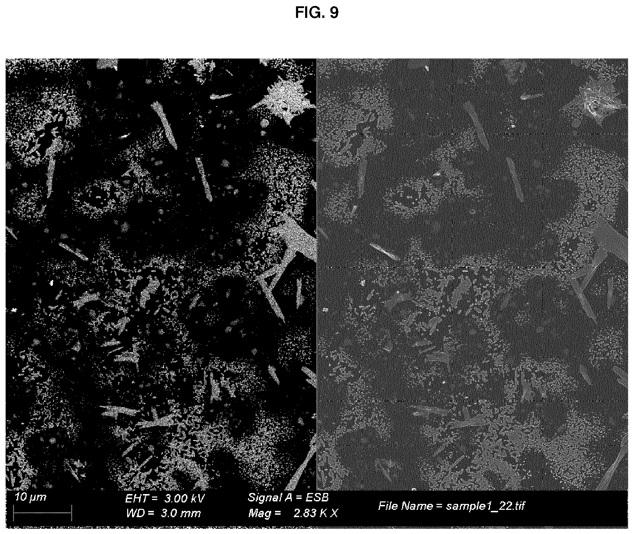

FIG. 9 shows the HRSEM of the film with the quantum rods. There are two images. The one on the left shows the backscattering image in which we can see only the embedded Quantum Rods and not the film. On the other hand, in the right image we can see the secondary lens image, in which we can see both the film and the quantum rods.

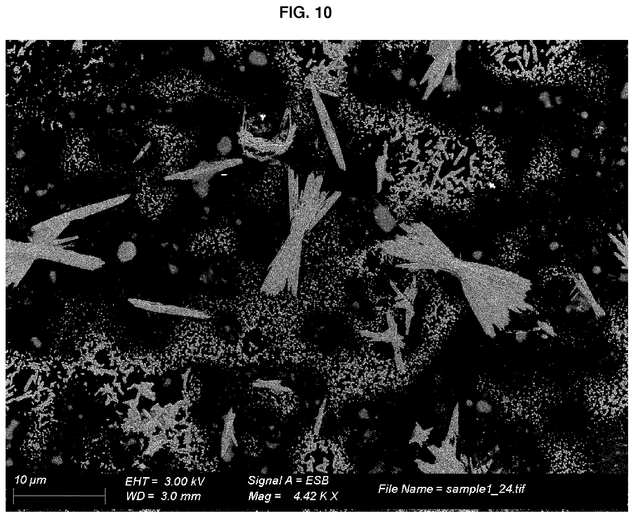

FIG. 10 shows the HRSEM of the Quantum Rods dispersed in the polymeric film at a higher magnification. It shows the back scattered image from deeper levels of the film and the distribution of the quantum rods at deeper regions inside the film. It only shows the Quantum rods embedded inside the film.

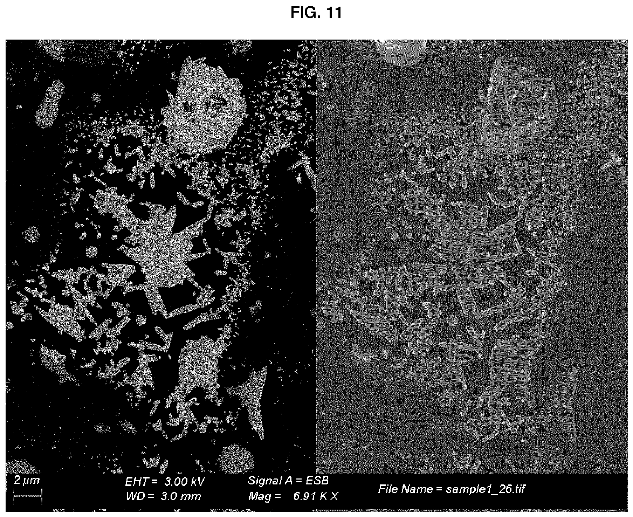

FIG. 11 shows the HRSEM of the Quantum Rods dispersed in the polymeric film at a higher magnification. It shows the secondary image from deeper levels of the film and the distribution of the Quantum Rods at deeper regions inside the film. It shows both the film and the Quantum Rods embedded inside it.

## Claims

1. A process for obtaining Quantum Rods in aqueous media having a composition selected from ZnSe, ZnS, CdS or CdSe **characterized in that** it comprises the following steps:
a) sequential adding an aqueous solution comprising Cd⁺² or Zn⁺² ions, a surfactant agent and a reducing agent into high pressure device;
b) adjusting the pH of the solution obtained in step (a) by adding a base to reach a pH range of between 9.5 and 12.5;
c) heating the high pressure device to raise its temperature to a temperature range of between 75 ºC and 100 ºC;
d) adding an aqueous solution of SeO₂ or an aqueous solution comprising S²⁻ions into the high pressure device, to the heated solution obtained in step (c);
e) heating the high pressure device to raise its temperature to a temperature value of between 140 ºC and 190 ºC;
f) reducing the pressure inside the high pressure device by 20 % to 30 % to evaporate between 40 % to 100 % of the water contained in the solution obtained in step (e);
g) maintaining the temperature of the partially opened high pressure device between 140 º C and 190 ºC for a time period of between 50 min and 70 min;
h) quenching the precipitate obtained in step (g) to room temperature; and
i) extracting the quenched precipitate obtained in step (h).

2. The process according to claim 1, wherein the aqueous solution comprising Cd⁺² or Zn⁺² ions of step (a) has a concentration of between 0.35 M and 0.45 M.

3. The process according to claim 1 or 2, **characterized in that** the surfactant agent and the reducing agent of step (a) are the same as or different from each other.

4. The process according to claim 3, **characterized in that** the surfactant agent and the reducing agent of step (a) are the same.

5. The process according to any of claims 1 to 4, **characterized in that** the surfactant agent and the reducing agent of step (a) are a mercaptan acid.

6. The process according to claim 5, **characterized in that** the concentration of the surfactant agent and the reducing agent of step (a) is between 0.2 M and 0.3 M.

7. The process according to any of claims 1 to 6, wherein the base of step (b) is selected from the list consisting of amines, NaOH and KOH.

8. The process according to any of claims 1 to 7, **characterized in that** the quenching of step (g) is performed in air.

9. Quantum Rod obtainable by the process according to any of claims 1 to 8, **characterized in that**
• they have a composition selected from ZnSe, ZnS, CdS or CdSe, and
• their length is between 100 nm and 300 nm and their diameter is between 20 nm and 30 nm.

10. Polymeric film selected from a Poly(vinyl alcohol, Polyvinyl Butyral, Polyvinyl Formal and Polydimethyl siloxane (PDMS)), , **characterized in that** it comprises the Quantum Dots according to claim 9, wherein the Quantum Dots are homogeneously distributed in the polymeric film and wherein the percent of the Quantum Rods in the polymeric film is between 60 % and 85 % with respect to the final film.

11. Use of the Quantum Rod according to claim 9 or the polymeric film according to claim 10, as part of a device useful in optoelectronics.

12. Use of the Quantum Rod according to claim 9 or the polymeric film according to claim 10, as polarized emitter.

13. Use of Quantum Rod according to claim 9 in biotechnological applications such as biological label reagent.

14. Use of Quantum Rod according to claim 9 or the polymeric film according to claim 10, as part of a device useful for biomedical imaging applications.

15. Use of the Quantum Rod according to claim 9 or the polymeric film according to claim 10, as part of a Quantum light-emitting diode LED.
